# EUROPÄISCHE PATENTSCHRIFT

(11) **EP 1 136 294 B1**
(45) Veröffentlichungstag und Bekanntmachung des Hinweises auf die Patenterteilung: **21.02.2007**
(21) Anmeldenummer: 01104225.6
(22) Anmeldetag: 22.02.2001
(51) Int. Cl.: B60J 7/12

(54) **Cabriolet-Fahrzeug**
Convertible vehicle
Véhicule convertible

(30) Priorität: 21.03.2000 DE 20005180 U
(43) Veröffentlichungstag der Anmeldung: 26.09.2001
(73) Patentinhaber: Wilhelm Karmann GmbH, 49084 Osnabrück (DE)
(72) Erfinder: Heselhaus, Udo, 49479 Ibbenbüren (DE); Plassmeyer, Uwe, 49124 Georgsmarienhütte (DE)
(74) Vertreter: Busse & Busse Patentanwälte

(56) Entgegenhaltungen:
- DE-A- 3 339 057
- DE-A- 19 707 019
- DE-U- 29 702 421

## Beschreibung

Die Erfindung betrifft ein Cabriolet-Fahrzeug mit einer Dachspitze nach dem Oberbegriff des Anspruchs 1.

Es ist bekannt, eine Dachspitze für ein Cabriolet-Fahrzeug der genannten Art mit einem über den Querverlauf des Verdecks durchgehenden Strangpreßprofil zu versehen. Dieses Bauteil ist sehr aufwendig herzustellen und erfordert erhebliche Nachbearbeitungen, insbesondere das Ausnehmen von Bohrungen und größeren Eintrittsöffnungen für Kabel, Haken, Festlegungsplatten für mechanische Bauteile und dergleichen sowie die nachträgliche Ausbildung einer gekrümmten Vorderkante zur Anlage an einen Windschutzscheibenrahmen. Das durchgehende Strangpreßprofil muß zu seiner Anpassung an den gekrümmten Windschutzscheibenrahmen gebogen werden. Hierzu ist beispielsweise ein diskontinuierliches Verfahren bekannt, bei dem ein Strangpreßprofil zwischen einem eine Polyurethanmatrix tragenden Schlitten und einer drehbaren Walze umgeformt wird. Ein solches Verfahren ist schwierig anzuwenden, wenn das Strangpreßprofil um eine senkrecht zu einer nennenswerten Breitenerstreckung des Strangpreßprofils verlaufende Achse umzuformen ist. Bei dem genannten durchgehenden Strangpreßprofil ist eine solche Umformung erforderlich, da dieses eine erhebliche Erstreckung in Fahrzeuglängsrichtung aufweist und zur Anpassung an den Windschutzscheibenrahmen um eine senkrecht hierzu stehende Achse umzuformen ist.

Aus der DE-A-197 07 019 ist ein Cabriolet-Fahrzeug der eingangs genannten Art bekannt, bei dem in jeweiligen Seitenendbereichen der mehrteiligen Dachspitze Profilteile vorgesehen sind. Diese sind als Winkel ausgebildet und haben Befestigungslöcher, die Befestigungsschrauben zum Befestigen von seitlichen Sperrhaken des Cabriolet-Verdecks tragen. Nachteilig hierbei ist, daß die Winkel nur als Teile zur Befestigung der Sperrhaken dienen können und diese die über den Querverlauf durchgehenden Träger nur an deren Seitenendbereichen verbinden. Soll zwischen den Winkeln weiteres vorgesehen werden, ist dieses separat abzustützen bzw. festzulegen.

Es ist Aufgabe der vorliegenden Erfindung, ein Cabriolet-Fahrzeug der eingans genannten Art dahingehend zu verbessern, daß einerseits die Dachspitze mehrteilig mit Trägern und dazwischen beabstandet angeordneten Profilteilen ausgebildet sein kann, diese jedoch einfach herzustellen und zur Halterung von weiteren Teilen genutzt werden können.

Zur Lösung dieser Aufgabe zeichnet sich das Cabriolet-Fahrzeugs durch die im Anspruch 1 angegebenen Merkmale aus. Hinsichtlich wesentlicher vorteilhafter Ausgestaltungen wird auf die Ansprüche 2 bis 4 verwiesen.

Durch die Verwendung von einzelnen Profilabschnitten können diese als Standardkastenprofile oder dergleichen ausgebildet sein. Die Profilabschnitte sind zueinander beabstandet, so daß dazwischen genügend Raum zum Einfädeln von Kabeln oder dergleichen verbleibt. Die Abstände der Profilabschnitte können so gewählt werden, daß diese als Sockel, beispielsweise zur Aufnahme eines zentralen Betätigungsgriffs zur Lösung seitlicher Verdeckverriegelungen, dienen. Ein sich hiervon auswärtserstreckendes Gestänge kann in den Zwischenräumen der Profilteile unproblematisch gehalten sein, ohne daß weitere Materialbearbeitungsschritte der Dachspitze nötig wären. Insbesondere bei einem sich zu den Querseiten erstreckenden Gestänge, das von dem zentralen Betätigungsgriff ausgeht, ergibt sich eine erhebliche Montageerleichterung. Die Profilabschnitte können in eine entsprechend vorgebildete Form eingelegt werden und mit einem vorderen und gegebenenfalls, was hinsichtlich der Stabilität besonders vorteilhaft ist, einem hinteren Querträger in dieser Form automatisiert verschweißt werden, so daß die Mehrteiligkeit in der praktischen Montage keinen zusätzlichen Aufwand bedeutet.

Weitere Vorteile und Einzelheiten ergeben sich aus einem in der Zeichnung dargestellten Ausführungsbeispiel des Gegenstandes der Erfindung. In der Zeichnung zeigt:
- Fig. 1: ein vollständiges Verdeckgestänge,

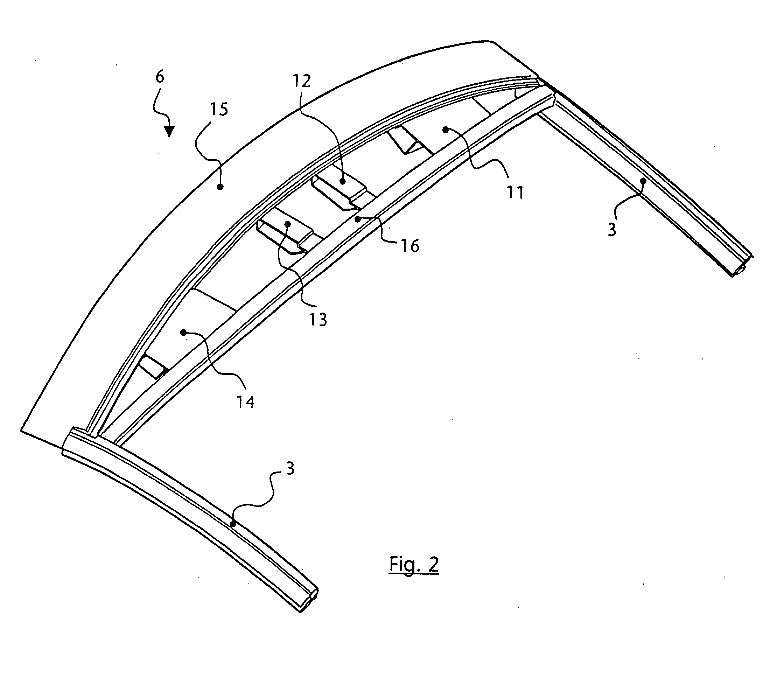

- Fig. 2: den vorderen Bereich der Dachspitze in Fig. 1,

- Fig. 3: eine ähnliche Ansicht wie Fig. 2 mit einem montierten zentralen Betätigungsgriff und hiervon seitlich ausgreifenden Gestängeteilen,

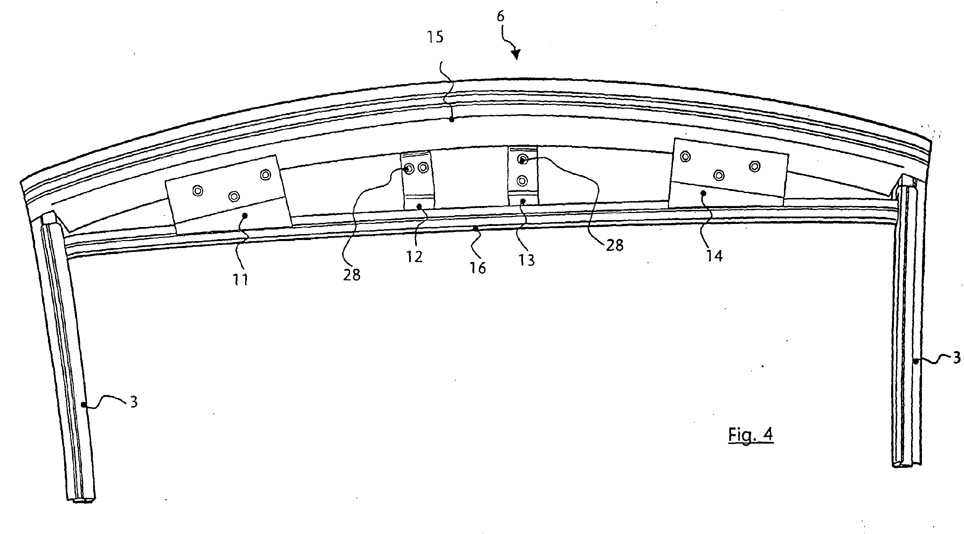

- Fig. 4: das Teil nach Fig. 2 in Ansicht von unten,
- Fig. 5: einen Schnitt entlang der Linie V-V in Fig. 3,
- Fig. 6: einen Schnitt entlang der Linie VI-VI in Fig. 3,
- Fig. 7: einen Schnitt entlang der Linie VII-VII in Fig. 3.

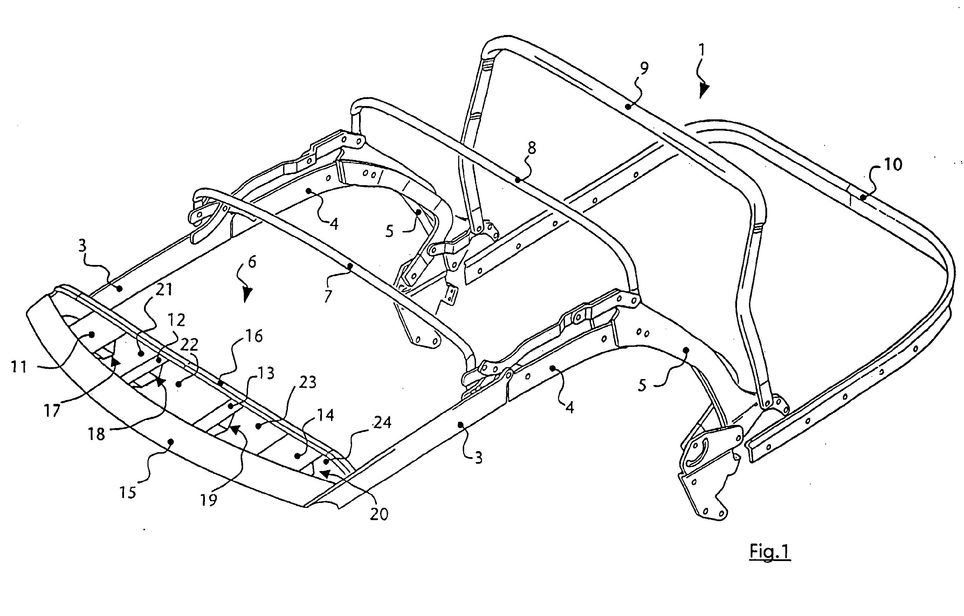

Das in Fig. 1 gezeigte Verdeckgestänge 1 ist mit einem zumindest teilweise mit einem flexiblen, beispielsweise textilen, Verdeckstoff bespannbar. Das Verdeckgestell 1 bildet einen Teil des Verdecks aus und weist seitliche Rahmenteile 3,4,5 an jeder Seite auf. Die vorderen seitlichen Rahmenteile 3 sind über eine Dachspitze 6 miteinander verbunden, die sich über den Querverlauf des Verdecks 1 erstreckt. Die seitlichen Rahmenteile sind in einem rückwärtig der Dachspitze 6 gelegenen Bereich noch über weitere quer verlaufende Spriegel 7,8,9 miteinander verbunden, ebenso über einen hinteren Spannbügel 10. Die Dachspitze 6 ist mehrteilig ausgebildet und umfaßt mehrere voneinander in Fahrzeugquerrichtung beabstandete Profilteile 11,12,13,14. Statt der gezeigten Anzahl von vier Profilteilen 11 - 14 ist auch eine andere Anzahl denkbar. Die Profilteile 11,12,13,14 sind jeweils als Strangpreßprofilteile ausgebildet und im Ausführungsbeispiel an einem vorderen und an einem hinteren Querträger 15,16, der sich jeweils über die Breite des Verdecks erstreckt, festgelegt, insbesondere verschweißt.

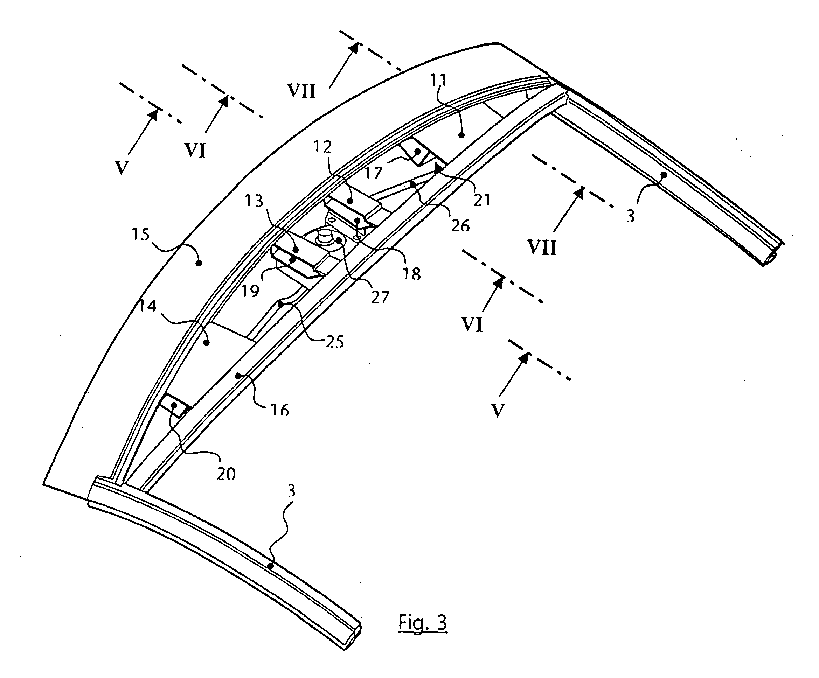

Die Profilteile 11,12,13,14 sind als Kastenprofile ausgebildet, so daß sie Hohlkörper ausbilden, die einen innenliegenden, quer zum Fahrzeug liegenden Kanalbereich 17,18,19,20 begrenzen. Der Kanalbereich erstreckt sich im Ausführungsbeispiel über einen Teil der Breite der Strangpreßprofile 11,12,13,14, wobei sich im hinteren Bereich noch freie Durchgänge 21,22,23,24 eröffnen, in denen im Ausführungsbeispiel (Fig. 3) Gestängeteile 25,26 verlaufen, die von einem zentralen, an den Profilteilen 12,13 befestigten Betätigungsgriff 27 auswärts zu seitlichen Verriegelungsvorrichtungen führen. In dem Kanalbereich 17,18,19,20 können dann beispielsweise Kabel gehalten sein. Zur Halterung des zentralen Betätigungsgriffs 27 ist keine gesonderte Platte oder dergleichen Halteteil erforderlich, sondern dieser kann direkt in Bohrungen 28 der mittleren Profilabschnitte 12,13 eingesetzt werden. An den seitlichen Profilabschnitten 11,14 können dann beispielsweise seitliche Riegel zur Halterung des Verdecks an dem Windschutzscheibenrahmen, die über die Gestängeteile 26,25 und das zentrale Betätigungselement 27 verlagerbar sind, angeordnet sein.

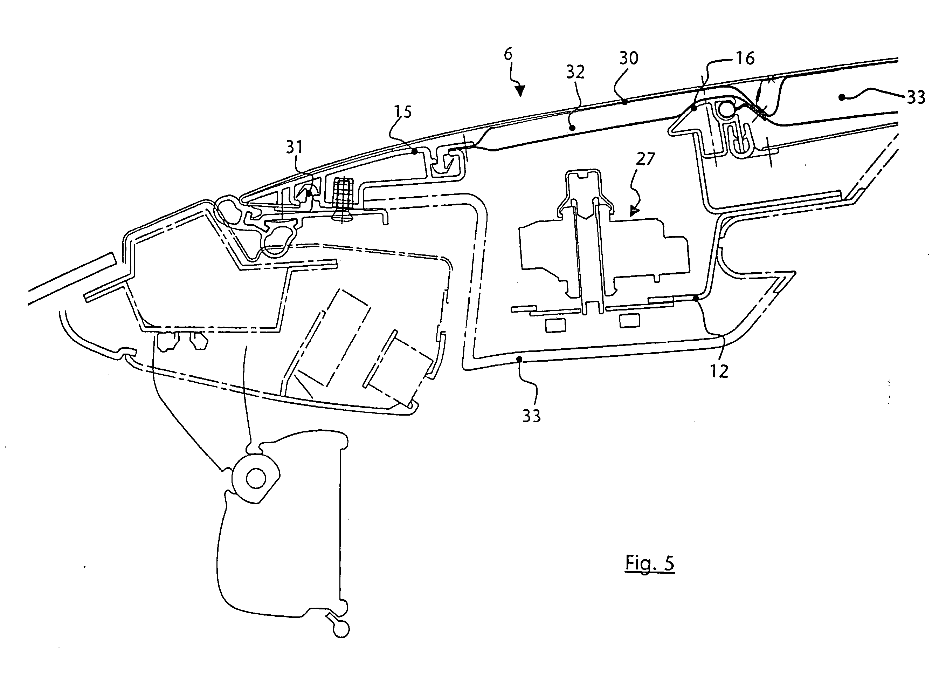

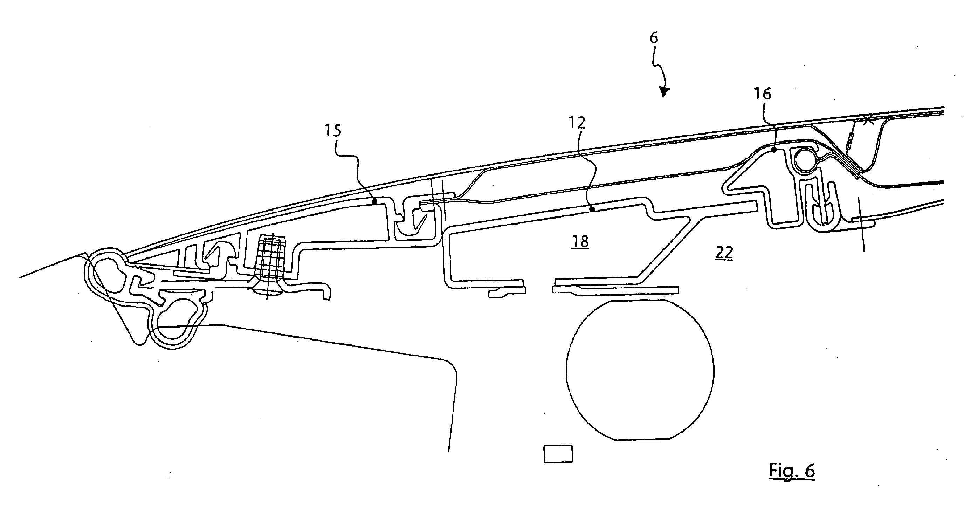

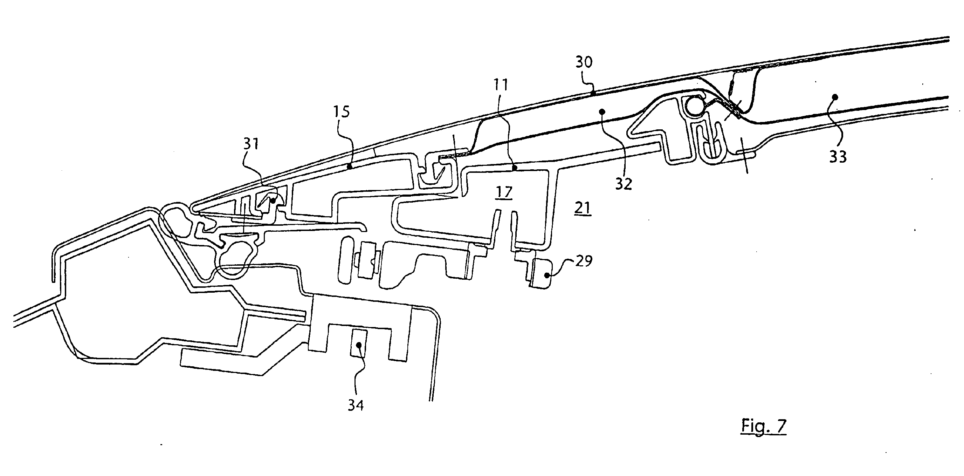

Die Fig. 5 - 7 verdeutlichen die Lage der Profilteile 12 und 11 innerhalb der Dachspitze 6. Ein Verdeckverschluß 29 kann mit seinem Verschlußhaken 34 dem seitlichen Profilteil 11 bzw. 14, die symmetrisch zu einer vertikalen Fahrzeuglängsmittelebene ausgebildet sind, zugeordnet sein. Die zentralen Profilabschnitte 12,13 tragen den Betätigungsgriff 27, der zum Benutzer weist. Die Dachspitze 6 ist außenseitig von Verdeckstoff 30 übergriffen, der im vorderen Bereich der Spitze mittels eines Keders oder dergleichen 31 halterbar ist. Eine Innenpolsterung 32,33 kann in üblicher Weise vorgesehen sein.

Innenseitig sind die Profilabschnitte 11,12,13,14 von Verkleidungsteilen 33 untergriffen.

Zur Herstellung einer derartigen Dachspitze 6 ist eine Form vorgesehen, in der die zueinander beabstandeten Profilteile 11,12,13,14 einlegbar sind und durch die Formgebung oder gesonderte Befestigungsmittel in dieser Lage unverrückbar halterbar sind. Die Querträger 15,16 übergreifen die Form an Randbereichen. Durch Schweißautomaten können diese mit den Profilteilen 11,12,13,14 automatisiert verschweißt werden. Die Anordnung von beispielsweise dem Betätigungsgriff 27 sowie weiteren mit der Dachspitze 6 zu verbindenden Teilen kann ebenfalls automatisiert erfolgen. Ebenso kann die Festlegung der Querträger 15,16 an den seitlichen Rahmenteilen 3 über Schweißautomaten erfolgen, wobei die Rahmenteile 3 ebenfalls unverrückbar in einem Formteil, das mit der Form zur Ausbildung der Dachspitze 6 in Verbindung steht, halterbar sein können. Auch eine lösbare Verbindung zwischen den Einzelteilen ist prinzipiell möglich, beispielsweise um eine spätere Umrüstmöglichkeit zwischen einem mechanischen und einem elektrischen Verdecköffnungsmechanismus vorsehen zu können.

## Patentansprüche

1. Cabriolet-Fahrzeug mit einem faltbaren Verdeck, das zumindest seitliche Rahmenteile (3;4;5) und eine die vorderen seitlichen Rahmenteile (3) verbindende, sich über den Querverlauf des Verdecks erstreckende Dachspitze (6) umfaßt, die mehrteilig ausgebildet ist und mehrere voneinander beabstandete und an zumindest einem über den Querverlauf des Verdecks durchgehenden Träger (15;16) festgelegte Profilteile umfaßt, **dadurch gekennzeichnet, daß** die Profilteile (11;12;13;14) an einem vorderen (15) und an einem hinteren Querträger (16), der sich jeweils von den seitlichen Rahmenteilen (3) durchgehend über den Querverlauf des Verdeckes erstreckt, festgelegt sind.

2. Cabriolet-Fahrzeug nach Anspruch 1, **dadurch gekennzeichnet, daß** die Profilteile (11;12;13;14) als Hohlkörper ausgebildet sind, die jeweils einen innenliegenden, quer zum Fahrzeug verlaufenden Kanalbereich (17;18;19;20) umgrenzen.

3. Cabriolet-Fahrzeug nach einem der Ansprüche 1 bis 2, **dadurch gekennzeichnet, daß** die Profilteile (11;12;13;14) als Strangpreßprofilteile ausgebildet sind.

4. Cabriolet-Fahrzeug nach einem der Ansprüche 1 bis 3, **dadurch gekennzeichnet, daß** die Profilteile (11;12;13;14) aus Metall, insbesondere Leichtmetall, ausgebildet sind.

## Claims

1. Convertible vehicle having a foldable top which comprises at least lateral frame parts (3, 4, 5) and a roof tip (6) which connects the front lateral frame parts (3), which extends across the transverse extent of the top, which is in multi-piece form and which comprises profiled parts which are spaced apart from one another and are fixed to at least one support (15, 16) which is continuous across the transverse extent of the top, **characterised in that** the profiled parts (11, 12, 13, 14) are fixed to a front transverse support (15) and a rear transverse support (16) which each extend continuously, from the lateral frame parts (3), across the transverse extent of the top.

2. Convertible vehicle according to claim 1, **characterised in that** the profiled parts (11, 12, 13, 14) are in the form of hollow bodies which each define an interior, passage-like region (17, 18, 19, 20) extending transversely to the vehicle.

3. Convertible vehicle according to either of claims 1 and 2, **characterised in that** the profiled parts (11, 12, 13, 14) are in the form of extruded profiled parts.

4. Convertible vehicle according to one of claims 1 to 3, **characterised in that** the profiled parts (11, 12, 13, 14) are formed from metal, and in particularly from light metal.

## Revendications

1. Véhicule décapotable ayant un toit pliant qui comprend au moins des éléments de cadre latéraux (3; 4; 5) et un nez de toit (6) reliant les éléments de cadre latéraux avant (3) l'un à l'autre, et s'étendant dans le sens transversal du toit, ce nez étant réalisé en plusieurs pièces et comprenant plusieurs éléments profilés espacés les uns des autres, fixés sur au moins un arceau continu (15; 16) s'étendant transversalement sur la largeur du toit,
**caractérisé en ce que** les éléments profilés (11; 12; 13; 13; 14) sont fixés sur une poutrelle transversale avant (15) et une poutrelle transversale arrière (16) qui s'étendent respectivement depuis les éléments de cadre latéraux (3) de façon ininterrompue sur la largeur du toit.

2. Véhicule décapotable selon la revendication 1, **caractérisé en ce que** les éléments profilés (11; 12; 13; 14) sont réalisés sous forme de corps creux qui délimitent chacun une zone de canal (17; 18; 19; 20) s'étendant à l'intérieur, transversalement au véhicule.

3. Véhicule décapotable selon l'une des revendications 1 à 2, **caractérisé en ce que** les éléments profilés (11; 12; 13; 14) sont réalisés sous forme de pièces profilées extrudées.

4. Véhicule décapotable selon l'une des revendications 1 à 3, **caractérisé en ce que** les éléments profilés (11; 12; 13; 14) sont faits en métal, notamment en métal léger.
